# EUROPEAN PATENT APPLICATION

(11) **EP 2 420 920 A2**
(43) Date of publication of application: **22.02.2012**
(21) Application number: 11250463.4
(22) Date of filing: 12.04.2011
(51) Int. Cl.: G06F 3/042

(54) **Light scan type touch panel**

(30) Priority: 23.07.2010 KR 20100071397
(71) Applicant: Samsung SDI Co., Ltd., Yongin-si, Gyeonggi-do (KR)
(72) Inventor: Do, Hyun-Chul, Yongin-si Gyeonggi-do (KR); Choi, Im-Su, Yongin-si Gyeonggi-do (KR); Kim, Young-Sun, Yongin-si Gyeonggi-do (KR)
(74) Representative: Taor, Simon Edward William

(57) **Abstract**

A light scan type touch panel includes: at least two light scanning units located outside of a display screen at one side; a plurality of light guide units located at other sides of the display screen; and a light receiving unit located at at least one end of each of the plurality of light guide units. Each of the light guide units includes: a light guiding member having a light incidence plane and a light emission plane; a diffusion sheet located at the light incidence plane; a plurality of reflection sheets located at planes of the light guiding member other than the light incidence plane and the light emission plane; and diffuse reflection inducing units located at one side of the light guiding member, facing one of the plurality of reflection sheets.

## Description

### BACKGROUND

### 1. Field

The described technology relates generally to a light scan type touch panel.

### 2. Description of the Related Art

A touch panel is typically mounted on a screen of a display device to calculate a coordinate of a specific location touched by a user. As a method for a touch panel to recognize a touch spot, a method using a resistance film, a method using sensing capacitance variation, a method using electric waves, a method using light blocking, and various other methods have been developed.

The method using light blocking includes a light scan type touch panel. The light scan type touch panel has a structure in which at least two light scan units, each being formed of a light emission element and a scan driving unit, are located at an external side of one end (or one side) of a display device, and a light guide unit and a light receiving element are located at other ends (or other sides) of the display device. The light receiving element is electrically connected with a signal processor.

When the light scan unit scans light in a direction that is parallel with the screen at a position above the screen of the display device, the light is transmitted to the light guide unit and the light guide unit transmits the light to the light receiving element. When a user touches a specific spot on the screen using an obstacle (e.g., a finger or a stylus pen), light at the touched spot is blocked so that the light receiving element and the signal processor calculate a coordinate of the black area caused by the obstacle through a series of operation processes.

The above information disclosed in this Background section is only for enhancement of understanding of the background of the described technology and therefore it may contain information that does not form the prior art that is already known in this country to a person of ordinary skill in the art.

### SUMMARY

The described technology provides a light scan type touch panel that can improve light receiving efficiency of a light receiving element by increasing light transmission efficiency of a light guide unit.

The described technology also provides a light scan type touch panel that can reduce or suppress coordinate distortion and reduce production cost by simplifying a signal process.

A light scan type touch panel according to an embodiment of the present invention includes: at least two light scanning units located outside of a display screen at one side; a plurality of light guide units located at other sides of the display screen; and a light receiving unit located at at least one end of each of the plurality of light guide units. Each of light guide units includes: a light guiding member having a light incidence plane and a light emission plane; a diffusion sheet located at the light incidence plane; a plurality of reflection sheets located at planes of the light guiding member other than the light incidence plane and the light emission plane; and diffuse reflection inducing units located at one side of the light guiding member, facing one of the plurality of reflection sheets.

The diffuse reflection inducing units may be located adjacent one of the reflection sheets, facing the diffusion sheet.

The diffuse reflection inducing units may include concave grooves formed at the light guiding member.

Each of the diffuse reflection inducing units may have a shape of a triangular prism.

The diffuse reflection inducing units may be arranged to be spaced from each other along a length direction of the light guiding member.

The light receiving unit may be located at one end of the light guide unit, and the diffuse reflection inducing units may be irregularly spaced from each other along a length direction of the light guiding member.

A distance between two adjacent ones of the diffuse reflection inducing units may be gradually decreased toward an opposite end of the light guiding member from the one end at which the light receiving unit is located.

One of the reflection sheets may be attached to the opposite end of the light guiding member where the light receiving unit is not located.

At least one of the reflection sheets may form an inclined angle with the diffusion sheet, and the light receiving unit may be located at one end of the light guide unit.

The diffuse reflection inducing units may be regularly spaced from each other along a length direction of the light guiding member.

A distance between two adjacent ones of the diffuse reflection inducing units may be gradually decreased as the diffuse reflection inducing units are located further from the light receiving unit.

The diffuse reflection inducing units may contact each other along a length direction of the light guiding member.

The number of light scanning units may be three for multi-touch recognition, and each of the three light scanning units may include a light emitting element and a scan driving unit that rotatably scans light emitted from the light emitting element. The emitted light may be a laser beam.

The scan driving unit may include a motor and a mirror installed on the motor, and the three scan driving units may be driven with a time-division method.

The three light scanning units may include three types of modulation filters provided between the light emitting element and the scan driving unit.

The light receiving unit may include three types of light filters corresponding to the three types of the modulation filters.

According to an aspect of the invention, there is provided a light scan type touch panel as set out in claim 1. Preferred features are set out in claims 2 to 15.

According to another aspect of the invention, there is provided a light scan type touch panel that includes: at least two light scanning units located outside of a display screen at one side of the display screen; a plurality of light guide units located at other sides of the display screen; and a light receiving unit located at at least one end of each of the plurality of light guide units. Each of light guide units includes: a light guiding member having a light incidence side that is arranged to face the light scanning units and a light emission side that is arranged to face a said light receiving unit; a diffusion sheet located adjacent the light incidence side; a plurality of reflection sheets located adjacent sides of the light guiding member other than the light incidence side and the light emission side; and diffuse reflection inducing units located at one side of the light guiding member facing one of the plurality of reflection sheets.

According to embodiments of the present invention, light receiving efficiency of the light receiving unit may be improved by increasing light transmission efficiency of the light guide unit. Therefore, a high-qualified touch panel having high resolution and low coordination recognition error may be realized. Further, production cost may be decreased by reducing the number of parts of the touch panel.

### BRIEF DESCRIPTION OF THE DRAWINGS

FIG. 1 is a schematic top plan view of a light scan type touch panel according to a first embodiment of the present invention.

FIG. 2 is a schematic diagram of a scan driver of the light scan type touch panel of FIG. 1.

FIG. 3 is a cross-sectional view of one light guide unit and two light receiving units of the light scan type touch panel of FIG. 1.

FIG. 4 is a partially cut-away perspective view of the light guide unit of FIG. 3.

FIG. 5 is a schematic top plan view of a light scan type touch panel for description of an example of multi-touch recognition.

FIG. 6 is a waveform of a light receiving signal.

FIG. 7 is a schematic top plan view of a light scan type touch panel according to a second embodiment of the present invention.

FIG. 8 is a cross-sectional view of a light guide unit of the light scan type touch panel of FIG. 7.

FIG. 9 is a schematic top plan view of a light scan type touch panel according to a third embodiment of the present invention.

FIG. 10A to FIG. 10C are cross-sectional views of a light guide unit of the light scan type touch panel of FIG. 9.

### DETAILED DESCRIPTION

The present invention will be described more fully hereinafter with reference to the accompanying drawings, in which exemplary embodiments of the invention are shown. As those skilled in the art would realize, the described embodiments may be modified in various different ways, all without departing from the scope of the present invention.

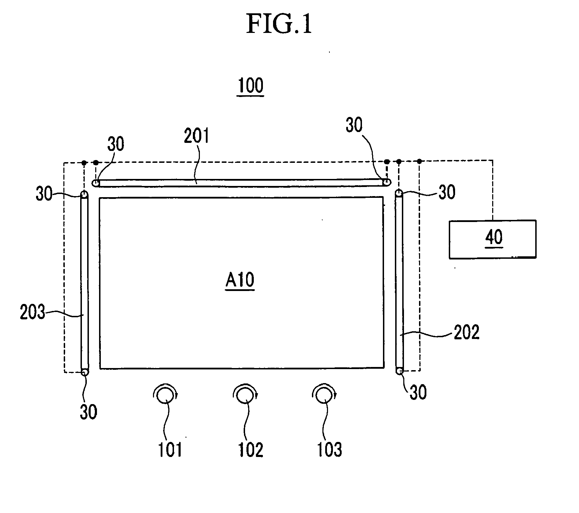

FIG. 1 is a schematic top plan view of a light scan type touch panel according to a first embodiment of the present invention.

Referring to FIG. 1, a light scan type touch panel 100 of the first embodiment is mounted on a display device, and includes light scanning units 101, 102, and 103, light guide units 201, 202, and 203, light receiving units 30, and a signal processor 40. The light scanning units 101, 102, and 103 are located outside of a display device screen A10 at one end (e.g., one side), and the light guide units 201, 202, and 203 are respectively located at ends (e.g., sides) of the display device screen A10 other than the end at which the light scanning units 101, 102 and 103 are located.

FIG. 1 illustrates that the light scanning units 101, 102, and 103 are located outside of the display device screen A10 at a lower end (e.g., a lower side), and the three light guide units 201, 202, and 203 are respectively located at the top, left, and right ends (e.g., top, left and right sides) of the display device screen A10. However, the locations of the light scanning units 101, 102, and 103 and the light guide units 201, 202, and 203 may be variously modified.

The light scan type touch panel 100 includes at least two light scanning units, and may include three light scanning units 101, 102, and 103 for multi-touch recognition. Here, the multi-touch implies that two or more obstacles concurrently touch the display device screen A10. The three light scanning units 101, 102, and 103 are located in parallel with each other outside of the display device screen A10 at one end (e.g., one side), while respectively having a gap therebetween. In other words, the three light scanning units 101, 102 and 103 of FIG. 1 are arranged on the same line and spaced apart from each other.

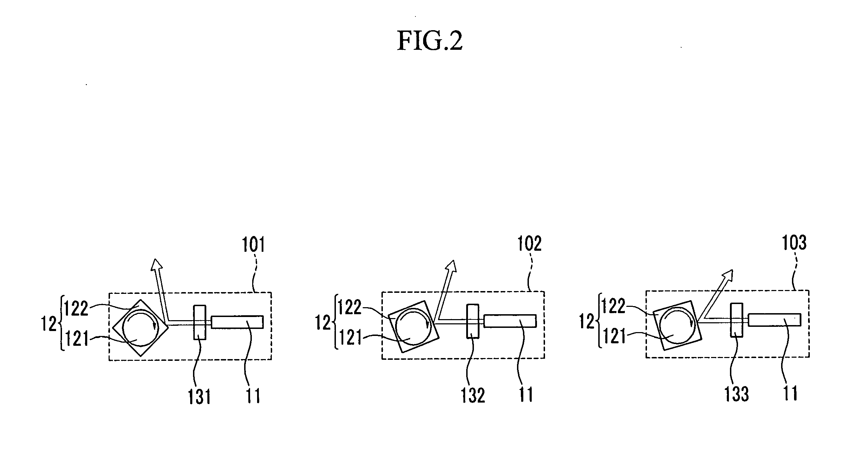

FIG. 2 is a schematic diagram of a scan driving unit (i.e., a scan driver) of the light scan type touch panel of FIG. 1.

Referring to FIG. 2, each of the light scanning units 101, 102, and 103 includes a light emitting element 11, and a scan driving unit 12 that rotationally scans light (e.g., laser beams) emitted from the light emitting element 11.

In one embodiment, the light emitting element 11 is formed of a laser emitting element that emits laser beams of a non-visible spectrum. The scan driving unit 12 may be formed of a motor 121 and a mirror (e.g., a polygon mirror) 122 installed on the motor 121. The scan driving unit 12 rotates the mirror 122 by the motor 121 to rotatably scan the laser beam emitted from the light emitting element 11 in parallel with the screen of the display device.

In one embodiment, the scan driving unit 12 scans the laser beams emitted from three light emitting elements 11 such that the corresponding laser beams can reach the light guide units 201, 202, and 203 with a time difference. That is, the three scan drivers 101, 102, and 103 set scan start times of the corresponding laser beams to be different from each other and use a time-division method. With the time-division method, the signal processor 40 can divide signals of the three light scan units 101, 102, and 103.

In addition, the light scan units 101, 102, and 103 have different types of modulation filters 131, 132, and 133 provided between the light emitting element 11 and the scan driving unit 12 to modulate the laser beams emitted from the three light emitting elements 11 with different frequencies. In this case, erroneous operation due to external light noise can be reduced or effectively suppressed. In other embodiments, the scan driving unit 12 may be omitted, and the light scan unit may be formed of the light emitting elements 11 and the modulation filters 131, 132, and 133.

The scan driving unit 12 is not limited to the embodiment disclosed in FIG. 2, and other devices (e.g., mechanical devices) such as a piezoelectric actuator may be used. In addition, when the light scan units 101, 102, and 103 have the modulation filters 131, 132, and 133, the light receiving units 30 have three types of light filters that pass laser beams of specific wavelengths. The signal processor 40 can divide signals of the three light scan units 101, 102, and 103 using the light filters.

Referring back to FIG. 1, the light guide units 201, 202, and 203 are located at other ends (e.g., other sides) of the display device screen A10 where the light scan units 101, 102, and 103 are not located, to receive the laser beams emitted from the light emitting element 11. In addition, the light receiving units 30 are located at both ends of each of the light guide units 201, 202, and 203. The light guide units 201, 202, and 203 transmit the laser beams emitted from the light emitting element 11 to the respective light receiving units 30.

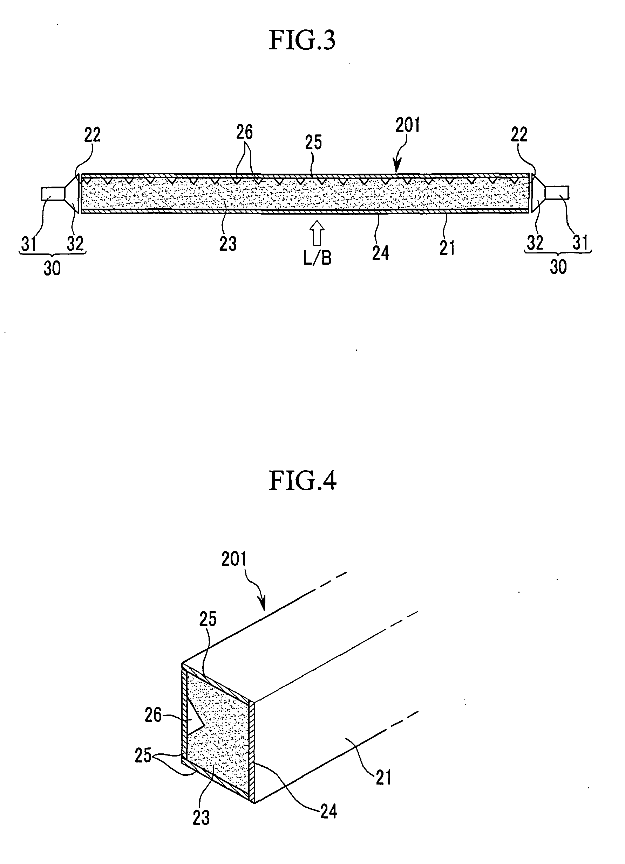

FIG. 3 is a cross-sectional view of one light guide unit (e.g., one light guide) and two light receiving units (e.g., two light receivers) of the light scan type touch panel of FIG. 1, and FIG. 4 is a cut-away perspective view of the light guide unit of FIG. 3.

Referring to FIG. 3 and FIG. 4, the light guide unit 201 has a long bar shape, and includes a light incidence plane 21 facing the light scan units 101, 102, and 103 and receiving laser beams (UB), and light emission planes 22 facing two light receiving units 30 to emit light. The light receiving unit 30 may be formed of a light receiving element 31 and a lens (e.g., a condensing lens) 32 located in front of the light receiving element 31.

The light guide unit 201 includes a transparent light guide member (or a light guiding member) 23 formed in a long bar shape, a diffusion sheet 24 located at the light incidence plane 21 of the light guide member 23 (i.e. adjacent the light incidence plane 21), and reflection sheets 25 located at (i.e. adjacent) the three other planes of the light guide member 23, other than the light incidence plane 21 and the light emission planes 22. The light guide member 23 may be made of a transparent acryl material. The light guide units 202 and 203 may have substantially the same configuration as the light guide unit 201. In other words, the light guide member may comprise a number of sides: one side corresponding to the light incidence plane 21 (i.e. the side facing the light scanning units) which is adjacent the diffusion sheet 24; at least one side (two in Figure 3) corresponding to light emission planes 22 (i.e. those sides facing the light receiving units); and other sides that are adjacent reflection sheets 25.

In addition, the light guide unit 201 includes diffuse reflection inducing units 26 formed at one side of the light guide member 23, facing one of the reflection sheets 25. The diffuse reflection inducing units 26 are concave grooves formed at one side of the light guide member 23, and for example, each of the concave grooves has a triangular prism shape.

The diffuse reflection inducing units 26 are located at an opposite side of the light guide member 23 from the diffuse sheet 24, that is, a side facing the diffusion sheet 24, and the diffuse reflection inducing units 26 and the diffuse sheet 24 are spaced (e.g., located at a predetermined distance) from each other. The diffuse reflection inducing units 26 are not limited to the triangular prism shape. That is, the groove shape of the diffuse reflection inducing units 26 may be variously modified.

In other words, the diffuse reflection inducing units 26 can be located on a side of the guide member 23 that faces away from the diffuse sheet 24.

The laser beams UB scanned from the light scan units 101, 102, and 103 are transmitted into the light guide member 23 through the diffuse sheet 24 of the light guide unit 201, and iterative light reflection is performed to the light emission plane 22 by the reflection sheets 25 located at the three planes of the light guide member 23. Thus, the light guide unit 201 emits the transmitted laser beams UB through the light emission plane 22, and the emitted laser beam UB is transmitted to the light receiving element 31 through the lens (e.g., condensing lens) 32.

In this case, since the diffuse reflection inducing units 26 are located at one side of the light guide member 23, facing the reflection sheet 25, active diffuse reflection is performed between the light guide member 23 and the reflection sheet 25 so that light transmission efficiency from the light incidence plane 21 to the light emission plane 22 may be improved.

That is, if no diffuse reflection inducing units are provided, most of the laser beams would be reflected toward the diffuse sheet by the reflection sheet. However, the laser beams reflected by the reflection sheet 25 are such that a relatively large amount of laser beams are emitted to the light emission plane 22. Thus, the light scan type touch panel 100 according to one embodiment may increase light receiving efficiency of the light receiving unit 30 and improve touch recognition sensitivity.

The light guide units 202 and 203 not shown in FIG. 3 and FIG. 4 may have substantially the same shape and configuration as the light guide unit 201.

Referring back to FIG. 1, the signal processor 40 is electrically connected to the light receiving units 30. When a user touches a specific spot on the screen using an obstacle, light at the touched spot is blocked and this is recognized by the light receiving unit 30. Then, the signal processor 40 calculates a coordinate of a black area caused by the obstacle through a series of operation processes.

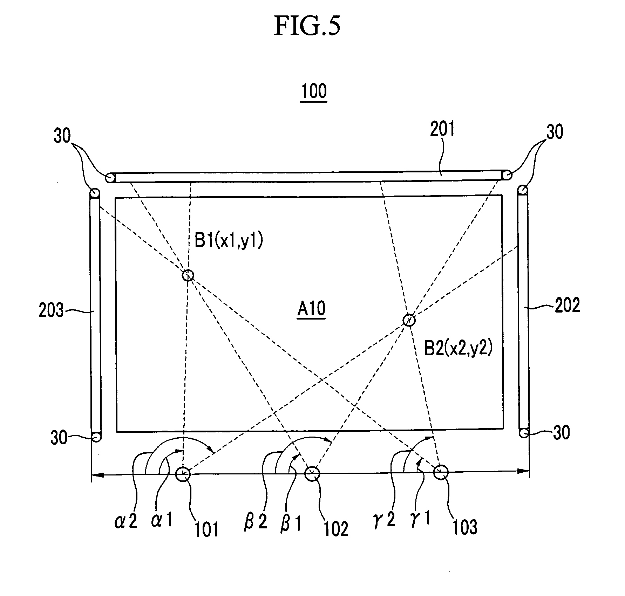

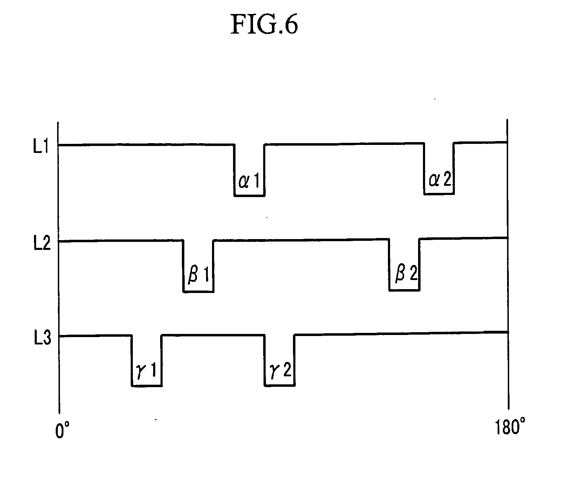

FIG. 5 is a schematic top plan view of the light scan type touch panel 100 for describing an example of multi-touch recognition, and FIG. 6 shows a waveform of the light receiving signal.

Referring to FIG. 5 and FIG. 6, the three light scan units 101, 102, and 103 scan laser beams L1, L2, and L3 with a rotational scan angle between 0° and 180° while having a time difference therebetween. When two obstacles B1 and B2 exist at specific spots of the display device screen A10, the laser beams L1, L2, and L3 emitted from the three light scan units 101, 102, and 103 cannot be transmitted to corresponding locations of the light guide units 201, 202, and 203 because they are blocked by the two obstacles B1 and B2.

Referring back to FIG. 1, the signal processor 40 calculates a time that the laser beams L1, L2, and L3 are blocked by the obstacles B1 and B2 and angles of the obstacles B1 and B2 with respect to the light scan units 101, 102, and 103 such that the signal processor 40 can calculate coordinates (x1, y1) of the first obstacle B1 and coordinates (x2, y2) of the second obstacle B2 by using triangulation.

In FIG. 5, angles of the first obstacle B1 with respect to the first light scan unit 101, the second light scan unit 102, and the third light scan unit 103 are respectively marked as α 1, β 1, and 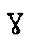 1, and angles of the second obstacle B2 with respect to the first light scan unit 101, the second light scan unit 102, and the third light scan unit 103 are respectively marked as α 2, β 2, and 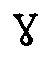 2. The operation process of the signal processor 40 is known to those skilled in the art, and therefore no further description will be provided.

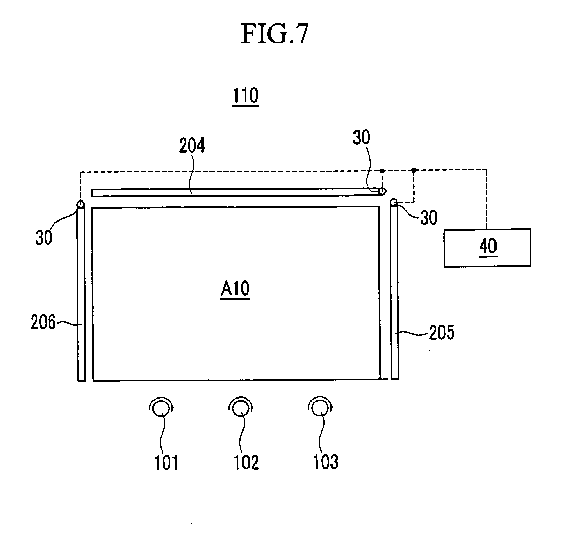

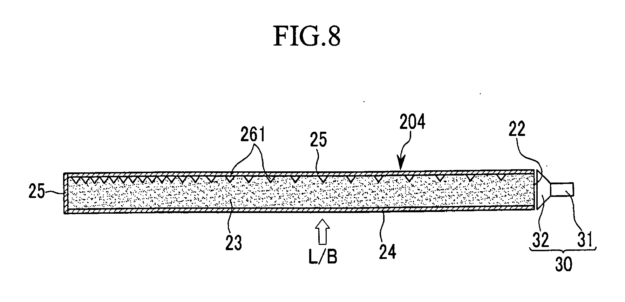

FIG. 7 is a schematic top plan view of a light scan type touch panel according to a second embodiment of the present invention, and FIG. 8 is a cross-sectional view of a light guide unit of the light scan type touch panel of FIG. 7. The same constituent elements as the first embodiment will have the same reference numerals, and different parts will be described.

Referring to FIG. 7 and FIG. 8, diffuse reflection inducing units 261 of a light scan type touch panel 110 according to the second embodiment are arranged to have a non-uniform gap therebetween along a length direction of a light guide member 23, and light receiving units 30 are respectively located at one end only of light guide units 204, 205, and 206. The gaps between the diffuse reflection inducing units 261 are gradually decreased from one side end of the light guide member 23 where the light receiving unit 30 is located to the opposite side end such that the diffuse reflection inducing units 261 are more densely arranged as they are located further away from the light receiving unit 30.

Since light transmission efficiency of the light guide unit 204 can be improved as the gap between the diffuse reflection inducing units 261 is decreased, the number of light receiving units 30 can be reduced. That is, one light receiving unit 30 is provided with respect to one light guide unit 204 so that the number of parts can be reduced. In this case, a reflection sheet 25 may be attached to the opposite side end of the light guide member 23 where the light receiving unit 30 is not provided.

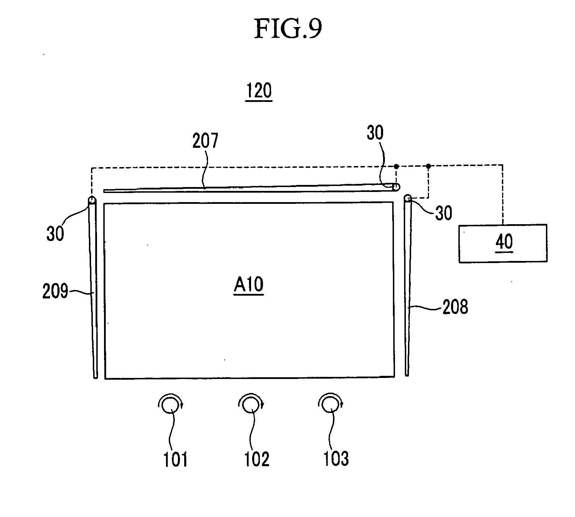

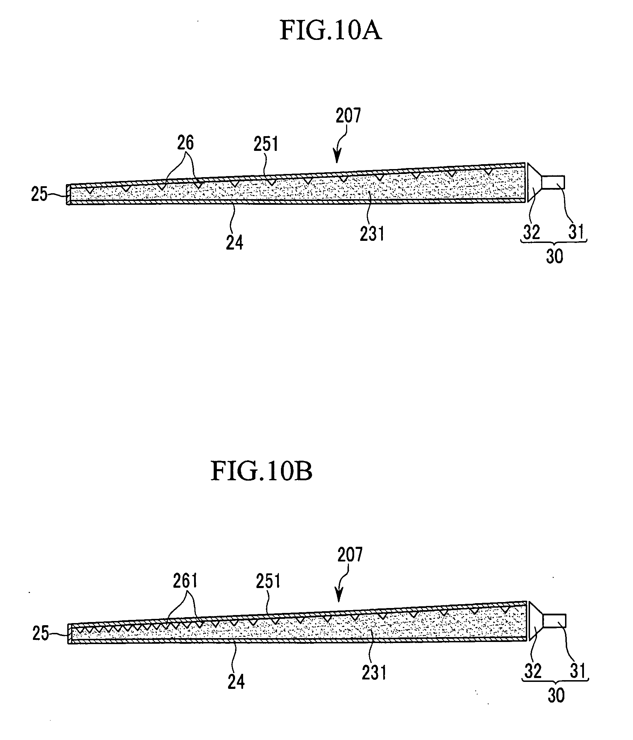

FIG. 9 is a schematic top plan view of a light scan type touch panel according to a third embodiment of the present invention, and FIG. 10A to FIG. 10C are cross-sectional views of the light scan type touch panel of FIG. 9. The same constituent elements as the first embodiment will have the same reference numerals, and different parts will be described.

Referring to FIG. 9 and FIG. 10A to FIG. 10C, a reflection sheet 251 is provided with an inclined angle (e.g., a predetermined inclined angle) with respect to a diffusion sheet 24 in a light scan type touch panel 120 according to the third embodiment, and a light receiving unit 30 is located at one side end of each of light guide units 207, 208, and 209.

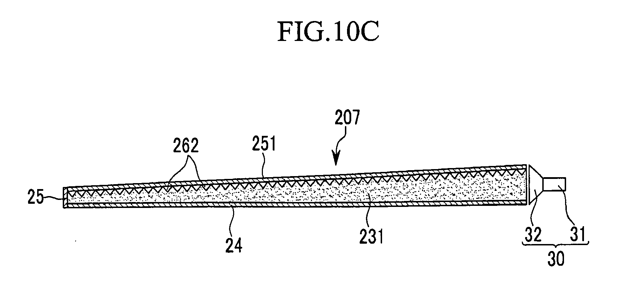

As shown in FIG. 10A, diffuse reflection inducing units 26 may be arranged with a constant gap therebetween along a length direction of a light guide member (or a light guiding member) 231. Alternatively, as shown in FIG. 10B, diffuse reflection inducing units 261 may be more densely arranged as they are located further away from the light receiving unit 30. Alternatively, as shown in FIG. 10C, diffuse reflection inducing units 262 may be arranged adjacent to each other in a length direction of the light guide member 231 without a gap (or with substantially no gap) therebetween.

The light guide member 231 is gradually decreased in width from one side end where the light receiving unit 30 is located toward the opposite side end, and consequently, a gap between a diffusion sheet 24 and a reflection sheet 251 is decreased as it goes away from the light receiving unit 30. In the three light guide units 207, 208, and 209, the diffusion sheets 24 are located in parallel with three sides of the display device screen A10, and the reflection sheets 251 facing the diffusion sheets 24 respectively have a slope (e.g., predetermined slope) with respect to the three sides of the display device screen A10.

As described, since the reflection sheet 251 is inclined with respect to the diffusion sheet 24, laser beams reflected from the reflection sheet 251 are basically inclined toward a direction of the light receiving unit 30. Therefore, the light scan type touch panel 120 of the third embodiment can further improve light transmission efficiency of the light guide units 207, 208, and 209 with the diffuse reflection inducing units 26, 261, and 262 and the inclined reflection sheets 251.

While this disclosure has been described in connection with what is presently considered to be practical exemplary embodiments, it is to be understood that the invention is not limited to the disclosed embodiments, but, on the contrary, is intended to cover various modifications and equivalent arrangements included within the scope of the appended claims and their equivalents.

## Claims

1. A light scan type touch panel comprising:
at least two light scanning units located outside of a display screen at one side of the display screen;
a plurality of light guide units located at other sides of the display screen; and
a light receiving unit located at at least one end of each of the plurality of light guide units,
wherein each of the light guide units comprises:
a light guiding member having a light incidence plane and a light emission plane;
a diffusion sheet located adjacent the light incidence plane;
a plurality of reflection sheets located adjacent planes of the light guiding member other than the light incidence plane and the light emission plane; and
diffuse reflection inducing units located at one side of the light guiding member, facing one of the plurality of reflection sheets.

2. A light scan type touch panel according to claim 1, wherein the diffuse reflection inducing units are located adjacent one of the reflection sheets, facing the diffusion sheet.

3. A light scan type touch panel according to claim 2, wherein the diffuse reflection inducing units comprise concave grooves formed in the light guiding member.

4. A light scan type touch panel according to claim 3, wherein each of the diffuse reflection inducing units has a shape of a triangular prism.

5. A light scan type touch panel according to claim 3 or 4, wherein the diffuse reflection inducing units are arranged to be spaced from each other along a length direction of the light guiding member.

6. A light scan type touch panel according to any one of claims 3 to 5, wherein said light receiving unit is located at one end of the light guide unit, and the diffuse reflection inducing units are irregularly spaced from each other along a length direction of the light guiding member.

7. A light scan type touch panel according to claim 6, wherein a distance between two adjacent ones of the diffuse reflection inducing units is gradually decreased toward an opposite end of the light guiding member from the one end at which said light receiving unit is located.

8. A light scan type touch panel according to claim 7, wherein one of the reflection sheets is attached to the opposite end of the light guiding member where the light receiving unit is not located.

9. A light scan type touch panel according to any one of claims 3 to 8, wherein at least one of the reflection sheets forms an inclined angle with the diffusion sheet, and said light receiving unit is located at one end of the light guide unit.

10. A light scan type touch panel according to claim 9, wherein the diffuse reflection inducing units are regularly spaced from each other along a length direction of the light guiding member.

11. A light scan type touch panel according to claim 9, wherein a distance between two adjacent ones of the diffuse reflection inducing units is gradually decreased as the diffuse reflection inducing units are located further from the light receiving unit.

12. A light scan type touch panel according to claim 9, wherein the diffuse reflection inducing units contact each other along a length direction of the light guiding member.

13. A light scan type touch panel according to any one of claims 1 to 12, wherein the at least two light scanning units comprise three light scanning units for multi-touch recognition, and each of the three light scanning units comprises a light emitting element and a scan driving unit arranged to rotatably scan light emitted from the light emitting element.

14. A light scan type touch panel according to claim 13, wherein the scan driving unit comprises a motor and a mirror installed on the motor, and the three scan driving units are arranged to be driven with a time-division method.

15. A light scan type touch panel according to claim 13, wherein the three light scanning units comprise three types of modulation filters provided between the light emitting element and the scan driving unit, optionally wherein the light receiving unit comprises three types of light filters corresponding to the three types of the modulation filters.
